# EUROPEAN PATENT APPLICATION

(11) **EP 4 664 565 A1**
(43) Date of publication of application: **17.12.2025**
(21) Application number: 25180371.4
(22) Date of filing: 03.06.2025
(51) Int. Cl.: H01M 4/62, H01B 1/06, H01M 10/0562, H01M 10/0525

(54) **MIXTURE AND BATTERY**

(30) Priority: 11.06.2024 JP 2024094171
(71) Applicant: TOYOTA JIDOSHA KABUSHIKI KAISHA, Toyota-shi, Aichi-ken 471-8571 (JP)
(72) Inventor: MINAMI, Keiichi, Aichi-ken, 471-8571 (JP)
(74) Representative: TBK

(57) **Abstract**

A main object of the present disclosure is to provide a mixture with which an electrode layer and an electrolyte layer with excellent ion conductivity are obtained. The present disclosure achieves the object by providing a mixture including a first solid electrolyte and a second solid electrolyte, wherein the first solid electrolyte and the second solid electrolyte contain Li, P, and S, and have an argyrodite type crystal structure; the first solid electrolyte includes an anion component including B; and the second solid electrolyte does not include an anion component including B.

## Description

### Technical Field

The present disclosure relates to a mixture and a battery.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. Also, as an electrolyte used for a battery, inorganic solid electrolytes have been known. One of the advantages of the inorganic solid electrolytes is that the simplification of a safety device may be more easily achieved compared to a liquid electrolyte (electrolyte solution) containing a flammable organic solvent.

For example, Patent Literature 1 discloses a solid electrolyte material including Li, T, X and A, wherein T includes at least one kind of element selected from a group consisting of Sb, P, As, Si, Ge, Al, B and W, X includes one kind or more of a halogen, a pseudo halogen, or N, A includes one kind or more of S or Se, and the solid electrolyte material has a peak at 2θ = 14.5° ± 0.50°, 16.8° ± 0.50°, 23.9° ± 0.50°, 28.1° ± 0.50°, and 32.5° ± 0.50°, in an X-ray diffraction measurement by Cu-Kα (1,2) = 1.54064Å.

Patent Literature 2 discloses a compound represented by a formula: Li₇₋ₓPS₆₋ₓX_{x-z}(BH₄)_{z}, in which X is selected from a group consisting of Cl, Br, I, F and CN, 0 < x ≤ 2, and 0 < z ≤ 0.50.

### Citation List

### Patent Literature

Patent Literature 1: Japanese Unexamined Patent Publication (JP-A) No. 2023-543227
Patent Literature 2: Japanese Unexamined Patent Publication (JP-A) No. 2020-534245

### Summary of Disclosure

### Technical Problem

In the viewpoint of improving the battery performance, the electrode layer and the electrolyte layer preferably have good ion conductivity. The present disclosure has been made in view of the above circumstances, and a main object thereof is to provide a mixture with which an electrode layer and an electrolyte layer with excellent ion conductivity are obtained.

### Solution to Problem

[1] A mixture comprising a first solid electrolyte and a second solid electrolyte, wherein
   the first solid electrolyte and the second solid electrolyte contain Li, P, and S, and have an argyrodite type crystal structure;
   the first solid electrolyte includes an anion component including B; and
   the second solid electrolyte does not include an anion component including B.
[2] The mixture according to [1], wherein the anion component including B is BH₄⁻.
[3] The mixture according to [1] or [2], wherein a rate of the first solid electrolyte with respect to a total of the first solid electrolyte and the second solid electrolyte is 7.0 weight% or more and 75.0 weight% or less.
[4] The mixture according to any one of [1] to [3], wherein a rate of the first solid electrolyte with respect to a total of the first solid electrolyte and the second solid electrolyte is 15.0 weight% or more and 60.0 weight% or less.
[5] The mixture according to any one of [1] to [4], wherein the second solid electrolyte contains a halogen as an anion component.
[6] The mixture according to [5], wherein the second solid electrolyte contains at least one of Cl and Br as the halogen.
[7] The mixture according to any one of [1] to [6], wherein the mixture contains an electrode active material.
[8] The mixture according to [7], comprising an anode active material as the electrode active material.
[9] The mixture according to [7], comprising a cathode active material as the electrode active material.
[10] A battery comprising a cathode active material layer, an anode active material layer, and an electrolyte layer arranged between the cathode active material layer and the anode active material layer, wherein
   at least one of the cathode active material layer, the anode active material layer, and the electrolyte layer contains the mixture according to any one of [1] to [9].

### Advantageous Effects of Disclosure

The present disclosure exhibits an effect of providing a mixture with which an electrode layer and an electrolyte layer with excellent ion conductivity are obtained.

### Brief Description of Drawings

FIG. 1 is a schematic cross-sectional view exemplifying the battery in the present disclosure.
FIG. 2 is a graph showing the results of Examples and Comparative Examples.

### Description of Embodiments

The mixture and the battery in the present disclosure will be hereinafter explained in details. Incidentally, drawings described as below is a schematic view, and the size and the shape of each portion are appropriately exaggerated in order to be understood easily.

### A. Mixture

The mixture in the present disclosure contains a first solid electrolyte and a second solid electrolyte. The first solid electrolyte and the second solid electrolyte contain Li, P, and S, and have an argyrodite type crystal structure. Also, the first solid electrolyte includes an anion component including B, and the second solid electrolyte does not include an anion component including B.

The mixture in the present disclosure contains the specified first solid electrolyte and second solid electrolyte, and thus the ion conductivity in the electrode layer and the electrolyte layer can be well.

It has been known that the solid electrolyte having an argyrodite type crystal structure (argyrodite type solid electrolyte) has excellent ion conductivity (bulk ion conductivity). Also, the solid electrolyte having the crystal structure (crystalline solid electrolyte) is, when used in a battery, in general, atomized. In this point, since the crystalline solid electrolyte is comparatively hard, when atomized, a gap is generated among solid electrolytes, and between a solid electrolyte and an electrode active material, and there is a risk that the interface resistance may increase. In contrast, although the bulk ion conductivity of the argyrodite type solid electrolyte (first solid electrolyte) with an anion component including B is considered lower compared to other argyrodite type solid electrolytes, it is considered a comparatively soft solid electrolyte. For this reason, when the mixture includes the first solid electrolyte, the gap can be filled, and as a result, the ion conductivity of the mixture as a whole is considered to be improved. Also, the mixture contains the first solid electrolyte, and thus the filling rate of the electrode layer can be improved, which is considered an advantage of contributing to increase capacity of the battery.

### 1. First solid electrolyte

The first solid electrolyte contains Li, P, and S, and has an argyrodite type crystal structure. Also, the first solid electrolyte includes an anion component including B. Incidentally, the first solid electrolyte is a different type of electrolyte from the later described second solid electrolyte, and typically, does not contain a halogen as an anion component. Here, since the first solid electrolyte contains S, in general, it corresponds to a sulfide solid electrolyte. The same applies to the later described second solid electrolyte.

Examples of the anion component including B may include BH₄⁻, BO₃⁻, B(OH)₄⁻, and B₄O₇²⁻. Among those, the first solid electrolyte preferably contains BH₄⁻ as an anion component.

The first solid electrolyte may contain BH₄⁻ as a main component of the anion component, or not as the main component. "Containing as a main component of the anion component" means that the rate of BH₄⁻ with respect to all the anions the first solid electrolyte contains is 50 mol% or more. Also, the first solid electrolyte preferably includes PS₄³⁻ as an anion component. The rate of PS₄³⁻ with respect to the total of BH₄⁻ and PS₄³⁻ is, for example, 20 mol% or more, and may be 25 mol% or more. Meanwhile, the rate of PS₄³⁻ is, for example, 50 mol% or less, may be 40 mol% or less, may be 35 mol% or less, and may be 30 mol% or less.

Examples of the composition of the first solid electrolyte may include xLi₃PS₄-(100-x)Li_{y}M. In this composition, x is, for example, 20 or more and may be 25 or more. Meanwhile, x is, for example, 50 or less, may be 40 or less, and may be 35 or less. Also, M is an anion component containing B, and y is an arbitrary number fixed by a valence of anion.

The first solid electrolyte in the present disclosure includes an argyrodite type crystal structure (crystal phase). Whether the first solid electrolyte includes the argyrodite type crystal structure can by confirmed by an X-ray diffraction (XRD) measurement. The first solid electrolyte preferably includes peaks at 2θ = 17.0° ± 0.5°, 24.1° ± 0.5°, 28.3° ± 0.5°, 29.6° ± 0.5°, and 38.6° ± 0.5° in an XRD measurement using a CuKα ray. These peaks are typical peaks of the argyrodite type crystal phase. These peak positions may be respectively in the range of ± 0.3°, and may be in the range of ± 0.1°.

The first solid electrolyte in the present disclosure preferably contains the argyrodite type crystal structure (crystal phase) as a main phase. "Main phase" refers to a crystal phase to which the peak with the highest intensity belongs in the XRD measurement using a CuKα ray.

The shape of the first solid electrolyte is usually a granular shape. The average particle size (D₅₀) of the first solid electrolyte is not particularly limited, and for example, it is 0.01 µm or more, may be 0.05 µm or more, may be 0.10 µm or more, may be 0.50 µm or more, and may be 1.0 µm or more. Meanwhile, the average particle size (D₅₀) of the first solid electrolyte is, for example, 30 µm or less, may be 20 µm or less, may be 10 µm or less, and may be 5 µm or less. The average particle size (D₅₀) refers to 50% accumulation particle size in a volume-based particle distribution by a laser diffraction particle distribution measurement device.

The position where the first solid electrolyte is present in the mixture is not particularly limited, but it is preferable that at least a part is arranged on the surface of the later described second solid electrolyte. The proportion of the first solid electrolyte arranged on the surface of the second solid electrolyte is, with respect to the whole first solid electrolyte, for example, 5 volume% or more, may be 10 volume% or more, may be 20 vol% or more, and may be 30 volume% or more. Meanwhile, the proportion of the first solid electrolyte arranged on the surface of the second solid electrolyte is, for example, 90 volume% or less, may be 80 vol% or less, may be 70 volume% or more, may be 60 vol% or less, and may be 50 volume% or less. Incidentally, the first solid electrolyte may be arranged to cover the second solid electrolyte. For example, a coating layer containing the first solid electrolyte may be formed on the surface of the second solid electrolyte by mechanical mixing such as mechanical milling with respect to the first solid electrolyte and the second solid electrolyte. By forming the coating layer, it is considered that the interface resistance can be restrained well even when the ratio of the first solid electrolyte is decreased. Also, since the ratio of the second solid electrolyte that has high bulk ion conductivity can be relatively increased, it is considered that the ion conductivity as the whole mixture can be improved.

The rate (weight ratio) of the first solid electrolyte with respect to a total of the first solid electrolyte and the second solid electrolyte is not particularly limited, but for example, it is 3.0 weight% or more, may be 5.0 weight% or more, may be 7.0 weight% or more, may be 10.0 weight% or more, and may be 15.0 weight% or more. Meanwhile, the rate of the first solid electrolyte is, for example, 98.0 weight% or less, may be 75.0 weight% or less, may be 60.0 weight% or less, may be 50.0 weight% or less, and may be 40.0 weight% or less.

Also, the rate (volume ratio) of the first solid electrolyte with respect to a total of the first solid electrolyte and the second solid electrolyte is not particularly limited, but for example, it is 3.0 volume% or more, may be 5.0 volume% or more, may be 7.0 volume% or more, may be 10.0 volume% or more, and may be 15.0 volume% or more. Meanwhile, the rate of the first solid electrolyte is, for example, 98.0 volume% or less, may be 75.0 volume% or less, may be 60.0 volume% or less, may be 50.0 volume% or less, and may be 40.0 volume% or less.

The position where the first solid electrolyte is present, the wight ratio and the volume ratio can be calculated from, for example, a SEM-EDS (Scanning Electron Microscope / Energy Dispersive X-ray Spectroscopy) analysis. For example, the region where boron elements are detected can be considered as a region of the first solid electrolyte, and the region where boron elements are not detected, but P elements and S elements are detected can be considered as a region of the second solid electrolyte. Also, a method for analyzing the element distribution from TOF-SIMS (Time-Of-Flight Secondary Ion Mass Spectrometry) can be exemplified.

### 2. Second solid electrolyte

The second solid electrolyte is a solid electrolyte that contains Li, P, and S, and has an argyrodite type crystal structure. Also, the second solid electrolyte does not include an anion component including B. The details other than the anion component are in the same contents as those described in "1. First solid electrolyte". "Not including an anion component including B" means that peaks of the anion component including B, such as BH₄⁻ described above is not confirmed in the spectrum obtained by an XPS (X-ray spectroscopy) to the second solid electrolyte.

Also, the second solid electrolyte preferably contains halogen (halogen ions) as an anion component. Thereby, the second solid electrolyte may have excellent ion conductivity. Examples of the halogen may include F, Cl, Br, and I. The second solid electrolyte may contain one kind of the halogen, and may contain two kinds or more of the halogen. Among these, the second solid electrolyte preferably contains at least one of Cl and Br. Also, the halogen may be included as a main component of the anion component, and may not as the main component. "Main component" is the same contents as those described in "1. First solid electrolyte". Also, the second solid electrolyte preferably includes PS₄³⁻ as an anion component. The proportion of PS₄³⁻ with respect to a total of the halogen and PS₄³⁻ is, for example, 10 mol% or more, may be 20 mol% or more, and may be 30 mol% or more. Meanwhile, the proportion of PS₄³⁻ is, for example, 50 mol% or less, and may be 40 mol% or less.

Examples of the composition of the second solid electrolyte not containing the halogen may include Li₇PS₆. Also, examples of the composition of the second solid electrolyte containing the halogen may include Li_{7-α}PS_{6-α}X_{α}. The X is at least one kind of the halogen, and the α satisfies 0 < α < 2. The α may be 0.1 or more, may be 0.5 or more, and may be 0.7 or more. Meanwhile, the α may be 1.8 or less, may be 1.5 or less, may be 1.2 or less, and may be 1.0 or less.

### 3. Mixture

The mixture in the present disclosure may or may not contain an electrode active material. In other words, the mixture in the present disclosure may be a mixture used in the electrode layers (cathode active material layer and anode active material layer), and may be a mixture used in the electrolyte layer.

The electrode active material may be an anode active material and may be a cathode active material.

Examples of the anode active material may include a Si-based active material, a carbon-based active material, and a Li-based active material. The Si-based active material is an active material containing a Si element. Examples of the Si-based active material may include a simple substance Si, a Si alloy and a Si oxide. The Si alloy preferably contains a Si element as a main component. The proportion of Si element in the Si alloy is, for example, 50 mol% or more, may be 70 mol% or more, and may be 90 mol% or more. Meanwhile the proportion of the Si element in the Si alloy is, for example, 99 mol% or less. Examples of the Si alloy may include a Si-Al-based alloy, a Si-Sn-based alloy, a Si-In-based alloy, a Si-Ag-based alloy, a Si-Pb-based alloy, a Si-Sb-based alloy, a Si-Bi-based alloy, a Si-Mg-based alloy, a Si-Ca-based alloy, a Si-Ge-based alloy, and Si-Pb-based alloy. The Si alloy may be a two component alloy, and may be a multi component alloy of three components or more. Examples of the Si oxide may include SiO.

Also, the Si-based active material may include a diamond type crystal phase, may include a silicon clathrate I type crystal phase, and may include a silicon clathrate II type crystal phase. In the silicon clathrate I type and II type crystal phases, a plurality of Si elements form a polyhedron (cage) including pentagons or hexagons. This polyhedron has a space inside to include metal ions such as Li ions, and thus the volume change due to charge and discharge can be inhibited.

Also, the Si-based active material may include a void inside the primary particle. The void can prevent the volume change of the active material, and can inhibit the crack of the electrode layer (anode active material layer). The void rate is not particularly limited, but for example, it is 4% or more and 40% or less. Whether the primary particle includes the void and the void rate can be confirmed by a SEM (scanning electron microscope) observation.

The carbon active material is an inorganic active material containing a C element, and examples thereof may include graphite, hard carbon, and soft carbon. Also, the Li-based active material is an active material containing a Li element, and examples thereof may include a simple substance of Li and a Li alloy.

Examples of the cathode active material may include an oxide active material. Examples of the oxide active material may include a rock salt bed type active material such as LiCoO₂, LiMnO₂, LiNiO₂, LiVO₂, and LiNi_{1/3}Co_{1/3}Mn_{1/3}O₂, a spinel type active material such as LiMn₂O₄, Li₄Ti₅O₁₂, and Li(Ni_{0.5}Mn_{1.5})O₄, and an olivine type active material such as LiFePO₄, LiMnPO₄, LiNiPO₄, and LiCoPO₄.

A coating layer containing Li-ion conductive oxide may be formed on the surface of the oxide active material. The reason therefor is to inhibit the reaction of the oxide active material and the solid electrolyte (particularly a sulfide solid electrolyte). Examples of the Li-ion conductive oxide may include LiNbO₃. The thickness of the coating layer is, for example, 1 nm or more and 30 nm or less. Also, as the cathode active material, for example, Li₂S can be used.

Examples of the shape of the electrode active material may include a granular shape. The average particle size (D₅₀) of the electrode active material is, for example, 10 nm or more and 50 µm or less. The average particle (D₅₀) is as described above. When the mixture contains the electrode active material, the proportion of the electrode active material in the mixture is, for example, 50 weight% or more and 90 weight% or less.

Also, the mixture in the present disclosure may contain at least one of a conductive aid and a binder, as required.

Examples of the conductive aid may include a carbon material, a metal particle, and a conductive polymer. Examples of the carbon material may include a particulate carbon material such as acetylene black (AB) and Ketjen black (KB), and a fiber carbon material such as carbon fiber, carbon nanotube (CNT), and carbon nanofiber (CNF). The proportion of the conductive aid in the mixture is, for example, 0.01 weight% or more and 10 weight% or less.

Examples of the binder may include a rubber-based binder such as a butadiene rubber (BR), an acrylate butadiene rubber (ABR), and a styrene butadiene rubber (SBR); and a fluorine containing binder such as polyvinylidene fluoride (PVDF) and polytetra fluoroethylene (PTFE). The proportion of the binder in the mixture is, for example, 0.01 weight% or more and 5 weight% or less.

### B. Battery

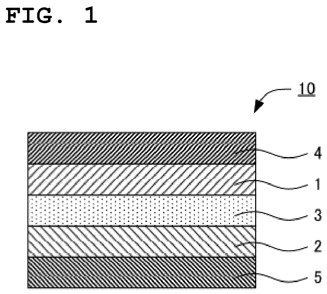

FIG. 1 is a schematic cross-sectional view exemplifying the battery in the present disclosure. Battery 10 shown in FIG. 1 includes cathode active material layer 1, anode active material layer 2, and electrolyte layer 3 arranged between the cathode active material layer 1 and the anode active material layer 2. Also, the battery 10 includes cathode current collector 4 for collecting electrons of the cathode active material layer 1, and anode current collector 5 for collecting electrons of the anode active material layer 2. In particular, in the battery 10 in the present disclosure, at least one of the cathode active material layer 1, the anode active material layer 2, and the electrolyte layer 3 contains the above described mixture.

### 1. Cathode active material layer and anode active material layer

The cathode active material layer is a layer containing at least a cathode active material, and preferably contains the above described mixture. The mixture is in the same contents as those described in "A. Mixture". The thickness of the cathode active material layer is not particularly limited, but for example, it is 0.1 µm or more and 1000 µm or less.

The anode active material layer is a layer containing at least an anode active material, and preferably contains the above described mixture. The mixture is in the same contents as those described in "A. Mixture". The thickness of the anode active material layer is not particularly limited, but for example, it is 0.1 µm or more and 1000 µm or less.

### 2. Electrolyte layer

The electrolyte layer is a layer arranged between the cathode active material layer and the anode active material layer, and contains at least an electrolyte. Also, the electrolyte layer preferably contains the above described mixture. The mixture is in the same contents as those described in "A. Mixture".

Here, in general, an electrolyte layer containing a solid electrolyte is called a solid electrolyte layer, and a battery including the solid electrolyte layer is called a solid state battery. Incidentally, the solid state battery may be a semisolid state battery and may be an all solid state battery. When the solid electrolyte layer in the solid state battery contains just an inorganic solid electrolyte as the electrolyte, the solid state battery is called an all solid state battery.

Examples of the solid electrolyte may include the above described first solid electrolyte and second solid electrolyte. Also examples of the solid electrolyte may include an inorganic solid electrolyte such as a sulfide solid electrolyte other than the first solid electrolyte and the second solid electrolyte, an oxide solid electrolyte, a nitride solid electrolyte, a halide solid electrolyte, and a complex hydride. The oxide solid electrolyte, the nitride solid electrolyte, and the halide solid electrolyte usually contains, as a main component of the anion, oxygen (O), nitrogen (N), and halogen (X) respectively.

Also, examples of the solid electrolyte may include an organic solid electrolyte such as a polymer electrolyte and a gel electrolyte.

Meanwhile, the electrolyte layer may contain the liquid electrolyte as the electrolyte. Examples of the liquid electrolyte may include conventionally known liquid electrolytes used in a battery. Specific examples may include a liquid electrolyte containing a lithium salt such as LiPF₆, and a non-aqueous solvent such as ethylene carbonate (EC), dimethyl carbonate (DMC), and ethyl methyl carbonate (EMC). When the liquid electrolyte is included as the electrolyte, the electrolyte layer may be a layer in which a separator is impregnated with the electrolyte. The separator may be a conventionally known material.

The thickness of the electrolyte layer is not particularly limited, but for example, it is 0.1 µm or more and 1000 µm or less.

### 3. Other constitutions

The battery in the present disclosure usually includes a cathode current collector and an anode current collector. Examples of the material for the cathode current collector may include SUS, aluminum, nickel, iron, titanium, and carbon. Meanwhile, examples of the material for the anode current collector may include SUS, copper, nickel, and carbon.

Also, the battery in the present disclosure may include an outer package for storing the above described members. Examples of the outer package may include a laminate type outer package and a case type outer package. Also, the battery in the present disclosure may include a restraining jig that applies a restraining pressure of a thickness direction to the above described members. As the restraining jig, known jigs may be used. The restraining pressure is, for example, 0.1 MPa or more and 50 MPa or less, and may be 1 MPa or more and 20 MPa or less.

### 4. Battery

The battery in the present disclosure may be a liquid-based battery in which the electrolyte layer contains a liquid electrolyte, and may be a solid state battery in which the electrolyte layer contains a solid electrolyte. Also, as described above, the solid state battery may be a semisolid state battery and may be an all solid state battery.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example.

The application of the battery in the present disclosure is not particularly limited, and examples thereof may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery in the present disclosure may be used as a power source for moving bodies other than vehicles (such as rail road transportation, vessel and airplane), and may be used as a power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Examples

### [Example 1]

First, a first solid electrolyte (BH₄ argyrodite) was produced in the following matters.

Li₂S (11.4828 g) and P₂S₅ (18.5172 g) were weighed and ball milling in heptane was performed thereto using 500 ml of ZrO₂ pot (ball diameter of 5 mm). Thereby, Li₃PS₄ was obtained. Li₃PS₄ and LiBH₄ were weighed so as to be 1 : 3 in the molar ratio, and ball milling in heptane was performed thereto using 500 ml ZrO₂ pot (ball diameter of 5 mm). Thereby, a first solid electrolyte (BH₄ argyrodite) was obtained. A wet particle size control was performed to the obtained first solid electrolyte using ball milling. In the ball milling, balls having diameters of 0.3 mm were used, and a mixture solvent of heptane and dibutyl ether was used as the solvent. After that, the product was burned in an inert atmosphere at 150°C for 3 hours.

Next, a second solid electrolyte (halogen-based argyrodite) was produced in the following manners.

Li₂S (0.2892 g), P₂S₅ (0.3682 g), LiCl (0.1124 g), and LiBr (0.2302 g) were mixed, and ball milling was performed thereto using 45 ml ZrO₂ pot (ball diameter of 5 mm). The obtained mixture powder was burned in an inert atmosphere at 500°C for 4 hours. Thereby, a second solid electrolyte (halogen-based argyrodite) was obtained. The obtained second solid electrolyte was crushed using mortar, and further, ball milling was performed thereto, and a wet particle size control was performed thereto. Incidentally, in the ball milling, balls having diameters of 1 mm were used, and a mixture solvent of heptane and butyl butyrate was used as the solvent.

The first solid electrolyte and the second solid electrolyte were weighed so that the rate of the first solid electrolyte with respect to the total of the first solid electrolyte and the second solid electrolyte was 10.0 weight%, and mixed by a mortar. Thereby, a mixture containing the first solid electrolyte and the second solid electrolyte was produced. The later described evaluation was performed using this mixture as a sample. Incidentally, although not illustrated in particular, when an XRD measurement was performed to the first solid electrolyte and the second solid electrolyte, the peak of the argyrodite type crystal phase was confirmed as the main peak.

### [Examples 2 to 5]

A mixture was produced in the same manner as in Example 1 except that the rate of the first solid electrolyte was respectively changed as shown in Table 1. These mixtures were used as samples, and later described evaluation was performed thereto.

### [Comparative Example 1 and Comparative Example 2]

The later described evaluation was performed using the above described first solid electrolyte or second solid electrolyte as the sample.

### [Evaluation]

### <Ion conductivity measurement>

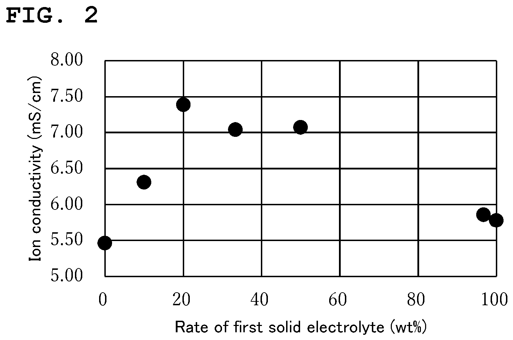

The above described samples were respectively pressed at a pressure of 6 t using a macole cylinder to prepare a powder compact. An impedance measurement was performed to the powder compact at 25°C to obtain the resistance value, and the ion conductivity was calculated from the shape factor. The results are shown in Table 1 and FIG. 2.

**[Table 1]**

| | Rate of first solid electrolyte (wt%) | Ion conductivity (mS/cm) |
|---|---|---|
| Comp. Ex. 1 | 0.0 | 5.46 |
| Example 1 | 10.0 | 6.31 |
| Example 2 | 20.0 | 7.39 |
| Example 3 | 33.3 | 7.04 |
| Example 4 | 50.0 | 7.07 |
| Example 5 | 96.7 | 5.86 |
| Comp. Ex. 2 | 100.0 | 5.78 |

As shown in Table 1 and FIG. 2, the mixture in the present disclosure showed excellent ion conductivity. From the result, it was suggested that the ion conductivity in the electrode layer and the electrolyte layer is improved by using the mixture in the present disclosure in a battery.

### Reference Sings List

- 1: cathode active material layer
- 2: anode active material layer
- 3: electrolyte layer
- 4: cathode current collector
- 5: anode current collector
- 10: battery

## Claims

1. A mixture **characterized by** comprising a first solid electrolyte and a second solid electrolyte, wherein
the first solid electrolyte and the second solid electrolyte contain Li, P, and S, and have an argyrodite type crystal structure;
the first solid electrolyte includes an anion component including B; and
the second solid electrolyte does not include an anion component including B.

2. The mixture according to claim 1, **characterized in that** the anion component including B is BH₄⁻.

3. The mixture according to claim 1, **characterized in that** a rate of the first solid electrolyte with respect to a total of the first solid electrolyte and the second solid electrolyte is 7.0 weight% or more and 75.0 weight% or less.

4. The mixture according to claim 1, **characterized in that** a rate of the first solid electrolyte with respect to a total of the first solid electrolyte and the second solid electrolyte is 15.0 weight% or more and 60.0 weight% or less.

5. The mixture according to claim 1, **characterized in that** the second solid electrolyte contains a halogen as an anion component.

6. The mixture according to claim 5, **characterized in that** the second solid electrolyte contains at least one of Cl and Br as the halogen.

7. The mixture according to claim 1, **characterized in that** the mixture contains an electrode active material.

8. The mixture according to claim 7, **characterized by** comprising an anode active material as the electrode active material.

9. The mixture according to claim 7, **characterized by** comprising a cathode active material as the electrode active material.

10. A battery comprising a cathode active material layer, an anode active material layer, and an electrolyte layer arranged between the cathode active material layer and the anode active material layer, **characterized in that**
at least one of the cathode active material layer, the anode active material layer, and the electrolyte layer contains the mixture according to any one of claim 1 to claim 9.
